# FASCICULE DE BREVET EUROPEEN

(11) **EP 0 838 355 B1**
(45) Date de publication et mention de la délivrance du brevet: **18.09.2002**
(21) Numéro de dépôt: 97402522.3
(22) Date de dépôt: 24.10.1997
(51) Int. Cl.: B60G 15/07, F16F 1/12

(54) **Dispositif de suspension du type pseudo Mac Pherson pour véhicules automobiles**
Vorrichtung einer Pseudo- Mac Pherson- Bauart- Kraftfahrzeugaufhängung
Device for pseudo-MacPherson type suspension for motor vehicles

(30) Priorité: 25.10.1996 FR 9613038
(43) Date de publication de la demande: 29.04.1998
(73) Titulaire: ALLEVARD, F-92210 Saint-Cloud (FR)
(72) Inventeur: Meaux, Pascal T., 59290 Wasquehal (FR); Hastey, Jean-Paul F., 59500 Douai (FR)
(74) Mandataire: Busnel, Jean-Benoît

(56) Documents cités:
- EP-A- 0 292 371
- EP-A- 0 319 651
- EP-A- 0 728 602
- DE-A- 4 110 471
- DE-A- 4 339 820
- FR-A- 2 540 586
- FR-A- 2 600 595
- FR-A- 2 641 741

## Description

La présente invention concerne un dispositif de suspension du type pseudo Mac Pherson pour véhicules automobiles.

Les dispositifs de suspension de type Mac Pherson sont largement utilisés dans l'industrie automobile et équipent un grand nombre de véhicules.

Ces dispositifs tels que celui décrit dans le EP 0 728 602 comprennent un amortisseur dont la partie inférieure est raccordée, d'une part à un essieu de roue et, d'autre part, à un bras de suspension fixé au châssis du véhicule et dont la partie supérieure est engagée à l'intérieur d'un ressort hélicoïdal d'axe central. Le ressort hélicoïdal prend appui dans le bas sur une coupelle inférieure solidaire de l'amortisseur et dans le haut sur une coupelle supérieure fixée à la caisse du véhicule. Un dispositif de suspension du type défini dans le préambule de la revendication 1 est connu du document DE-A-4 110 471.

Dans le FR-A-2 641 741, les zones d'appui du ressort sur les coupelles consistent en des portions d'arc comprises entre 60° et 120°.

Trois forces principales sollicitent une telle suspension ; il s'agit de l'effort à la roue, de l'effort du bras de suspension et de l'effort de la caisse retransmis par l'appui du ressort sur les coupelles.

Pour que cette suspension soit en équilibre, il est nécessaire que ces trois forces soient concourantes.

Or, la plupart du temps cette condition n'est pas satisfaite du fait que la résultante des efforts d'appui du ressort s'exerce parallèlement à son axe central et sans rencontrer l'intersection des autres directions des autres forces.

Par suite, des efforts compensateurs parasites se produisent au niveau de l'amortisseur (palier de tige, piston ...) pour rétablir cet équilibre indispensable.

Mais ces efforts sont néfastes car ils provoquent une usure prématurée du palier de l'amortisseur et génèrent des frottements solides qui nuisent à la qualité de la suspension et dégradent le confort de l'habitacle.

Une solution consiste à modifier la direction de l'effort de la caisse en changeant l'orientation du ressort et en l'inclinant par rapport à l'axe de l'amortisseur. Mais l'espace disponible sur le véhicule entre la roue et la coupelle d'appui inférieure, pour une telle disposition notablement plus encombrante, n'est pas toujours suffisant.

Une autre solution consiste à utiliser des formes particulières de ressort mais l'équilibre des trois forces appliquées au système n'est alors atteint que dans une position définie de la suspension et non sur toute sa course.

De ce fait, la recherche de l'équilibre reste dans tous les cas très difficile.

L'invention a pour but de résoudre les problèmes techniques précédents de manière satisfaisante.

Ce but est atteint selon l'invention, au moyen d'un dispositif de suspension du type pseudo Mac Pherson pour véhicule comprenant un amortisseur dont la partie inférieure est raccordée d'une part, à un essieu de roue et, d'autre part, à un bras de suspension fixé au châssis du véhicule et dont la partie supérieure est engagée à l'intérieur d'un ressort hélicoïdal d'axe central prenant appui dans le bas sur une coupelle inférieure solidaire de l'amortisseur et dans le haut sur une coupelle supérieure fixée à la caisse du véhicule, les zones d'appui des spires d'extrémité du ressort avec les coupelles inférieure et supérieure sont situées sur une portion d'arc comprise entre 60º et 120º et disposées respectivement du côté extérieur et intérieur par rapport à l'axe dudit ressort, ledit amortisseur et ledit ressort étant disposés de façon coaxiale.

Selon une caractéristique avantageuse la portion d'arc des spires d'extrémité du ressort en contact d'appui avec les coupelles est symétrique par rapport à l'axe de l'essieu.

Selon une autre caractéristique, les portions d'arc des spires d'extrémité du ressort qui sont en contact d'appui respectivement avec les coupelles inférieure et supérieure ont même longueur.

Selon encore une autre caractéristique, les portions d'arc des spires en contact d'appui avec les coupelles inférieure et supérieure sont symétriques par rapport à l'axe du ressort d'une spire d'extrémité à l'autre.

Selon un mode de réalisation particulier l'inclinaison de la direction de la résultante des efforts d'appui du ressort par rapport à son axe central est comprise entre 8º et 16º.

Selon un autre mode de réalisation, les faces d'appui des coupelles en contact avec les spires d'extrémité du ressort sont planes.

Selon encore un autre mode de réalisation, au moins l'une desdites coupelles comporte une rainure curviligne s'étendant au moins sur une longueur correspondant à la portion d'arc de la spire d'extrémité en contact d'appui pour la recevoir de façon calée.

Le dispositif de suspension de l'invention offre donc des zones d'appui du ressort sur les coupelles dont les longueurs sont limitées et qui sont de préférence, diamétralement opposées.

Par conséquent, avec le dispositif de l'invention l'équilibre du système est conservé quelque soit l'état de charge de la suspension.

L'invention sera mieux comprise à la lecture de la description qui va suivre accompagnée des dessins sur lesquels :
- la figure 1 représente une vue schématique d'une suspension du type Mac Pherson, et
- la figure 2 est une vue de dessus partielle d'un mode de réalisation du dispositif de l'invention appliqué à la roue gauche d'un véhicule.

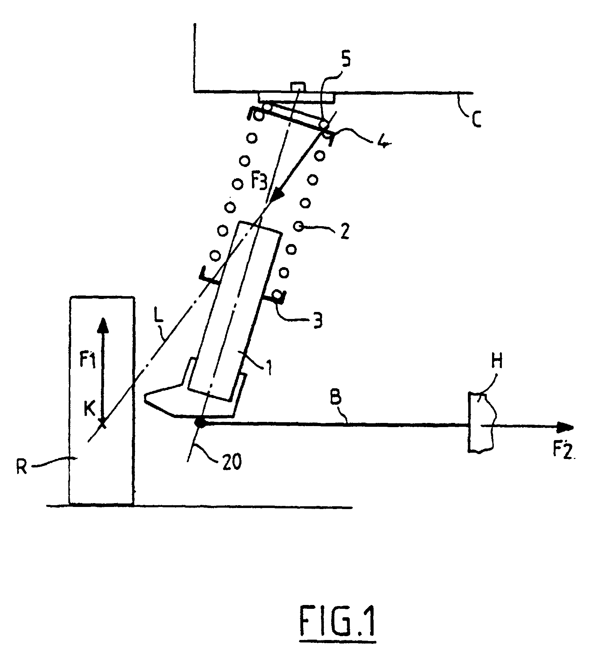

Le dispositif de suspension pour véhicule représenté sur la figure 1 est du type Mac Pherson. Il comprend un amortisseur 1 raccordé de manière traditionnelle par sa partie inférieure, d'une part, à une roue gauche R ou à un essieu et, d'autre part, à un bras de suspension B fixé au châssis H du véhicule.

L'amortisseur 1 coopère avec un ressort hélicoïdal 2 d'axe central 20.

A cet effet, la partie supérieure de l'amortisseur 1 est engagée par le bas à l'intérieur du ressort 2.

Le ressort 2 est monté entre la caisse C du véhicule et l'amortisseur 1 en prenant appui dans le bas sur une coupelle inférieure 3 solidaire de l'amortisseur 1 et dans le haut sur une coupelle supérieure 4 fixée à la caisse C par le biais de roulements 5.

L'amortisseur 1 a une forme sensiblement cylindrique qui passe au travers de la coupelle inférieure 3.

L'équilibre de la suspension est assuré lorsque les trois forces mécaniques F1, F2, F3 traduisant respectivement les efforts s'exerçant sur la roue R, sur le bras de suspension B et sur la caisse C ont des directions concourantes. Les forces F1 et F2 relatives aux efforts de la roue R et du bras B sont généralement orthogonales ou tout au moins concourantes au centre de gravité K de la roue R.

En revanche, la force F3 relative à l'effort exercé par la caisse C est retransmise par le ressort 2, sous forme d'efforts d'appui, sur les coupelles inférieure 3 et supérieure 4.

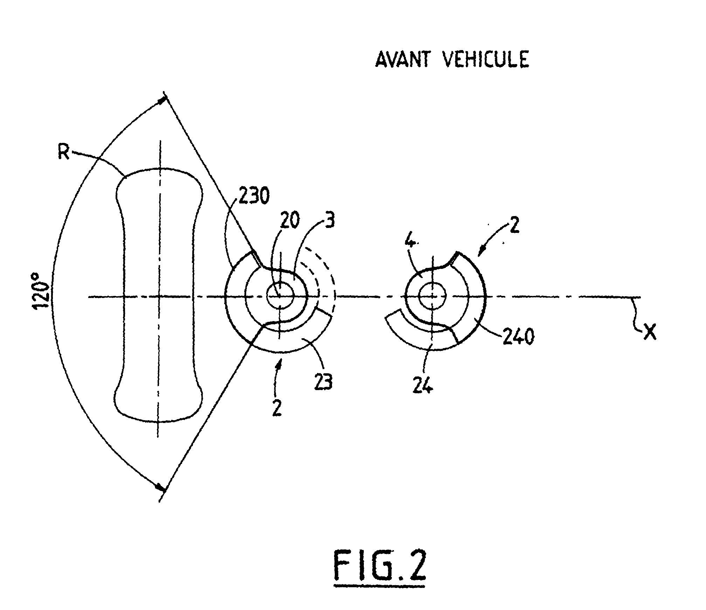

La figure 2 représente une vue de dessus partielle d'un mode de réalisation du dispositif selon l'invention qui permet d'obtenir l'équilibre en localisant l'appui du ressort 2 sur les coupelles 3,4 de façon à ce que l'effort F3 exercé par la caisse C présente une direction orientée selon L (voir figure 1).

Dans cet objectif, les contacts d'appui entre les spires d'extrémités du ressort 2 et les coupelles 3,4 sont assurés sur des portions d'arc comprises entre 60º et 120º.

De préférence, ces portions d'arc sont symétriques par rapport à l'axe X de l'essieu et ont même longueur.

Elles sont également symétriques par rapport à l'axe vertical 20 du ressort 2.

Il est également prévu que l'inclinaison a de la direction L de la résultante F3 est comprise entre 8º et 16º.

Dans ces conditions, au fur et à mesure que le ressort 2 est comprimé, l'angle α augmente, permettant ainsi de conserver l'équilibre du système quelque soit l'état de charge de la suspension.

La portion d'arc de la spire d'extrémité du ressort 2 en contact d'appui avec la coupelle supérieure 4 est située du côté intérieur au véhicule comme représenté sur la figure 2.

Inversement, la portion d'arc de la spire d'extrémité du ressort 2 en contact d'appui avec la coupelle inférieure 3 est située du côté extérieur au véhicule.

Les faces d'appui des coupelles 3,4 en contact avec les spires d'extrémité 23,24 du ressort sont planes ou pour au moins l'une d'entre elles formée d'une rainure curviligne (non représentée) s'étendant sur au moins une longueur correspondant à la portion d'arc comprise entre 60º et 120º pour la recevoir la spire d'extrémité de façon calée.

## Revendications

1. Dispositif de suspension du type pseudo Mac Pherson pour véhicule comprenant un amortisseur (1) dont la partie inférieure est raccordée d'une part, à un essieu de roue (R) et, d'autre part, à un bras de suspension (B) fixé au châssis (H) du véhicule et dont la partie supérieure engagée à l'intérieur d'un ressort hélicoïdal (2) d'axe central (20) prenant appui dans le bas sur une coupelle inférieure (3) solidaire de l'amortisseur (1) et dans le haut sur une coupelle supérieure (4) fixée à la caisse (C) du véhicule, les zones d'appui des spires d'extrémité (23,24) du ressort (2) avec les coupelles inférieure (3) et supérieure (4) sont disposées respectivement du côté extérieur et intérieur par rapport à l'axe (20) dudit ressort, **caractérisé en ce que** ledit amortisseur (1) et ledit ressort (2) sont disposés de façon coaxiale et **en ce que** lesdites zones d'appui sont situées sur une portion d'arc (230,240) comprise entre 60º et 120º.

2. Dispositif selon la revendication 1, **caractérisé en ce que** la portion d'arc (230,240) des spires d'extrémité (23,24) du ressort (2) en contact d'appui avec les coupelles (3,4) est symétrique par rapport à l'axe (X) de l'essieu.

3. Dispositif selon la revendication 1 ou 2, **caractérisé en ce que** les portions d'arc (230,240) des spires d'extrémité (23,24) du ressort (2) qui sont en contact d'appui respectivement avec les coupelles inférieure (3) et supérieure (4) ont même longueur.

4. Dispositif selon l'une des revendications précédentes, **caractérisé en ce que** les portions d'arc (230,240) des spires en contact d'appui avec les coupelles inférieure (3) et supérieure (4) sont symétriques par rapport à l'axe (20) du ressort (2) d'une spire d'extrémité (23) à l'autre (24).

5. Dispositif selon l'une des revendications précédentes, **caractérisé en ce que** l'inclinaison (α) de la direction de la résultante (F3) des efforts d'appui du ressort (2) par rapport à son axe central (20) est comprise entre 8º et 16º.

6. Dispositif selon l'une des revendications précédentes, **caractérisé en ce que** les faces d'appui des coupelles (3,4) en contact avec les spires d'extrémité (23,24) du ressort (2) sont planes.

7. Dispositif selon l'une des revendications précédentes, **caractérisé en ce que** au moins l'une desdites coupelles (3,4) comporte une rainure curviligne s'étendant sur au moins une longueur correspondant à la portion d'arc (230,240) de la spire d'extrémité (23,24) en contact d'appui pour la recevoir de façon calée.

## Claims

1. Suspension device of the pseudo MacPherson type for a vehicle comprising a shock absorber (1), the lower part of which is connected, on the one hand, to a wheel axle (R) and, on the other hand, to a suspension arm (B) fixed to the chassis (H) of the vehicle and the upper part of which engaged within a helicoidal spring (2) with a central axis (20) being supported at the bottom by a lower cup (3) integral with the shock absorber (1) and at the top by an upper cup (4) fixed to the bodywork (C) of the vehicle, the support zones of the end coils (23, 24) of the spring (2) with the lower (3) and upper (4) cups are arranged on the outside and inside respectively with respect to the axis (20) of said spring, **characterised in that** said shock absorber (1) and said spring (2) are arranged coaxially, and **in that** said support zones are located over an arc portion (230, 240) comprised between 60° and 120°.

2. Device according to Claim 1, **characterised in that** the arc portion (230, 240) of the end coils (23, 24) of the spring (2) in support contact with the cups (3, 4) is symmetrical with respect to the axis (X) of the axle.

3. Device according to Claim 1 or 2, **characterised in that** the arc portions (230, 240) of the end coils (23, 24) of the spring (2) which are in support contact with the lower (3) and upper (4) cups respectively have the same length.

4. Device according to one of the preceding claims, **characterised in that** the arc portions (230, 240) of the coils in support contact with the lower (3) and upper (4) cups are symmetrical with respect to the axis (20) of the spring (2) from one end coil (23) to another (24).

5. Device according to one of the preceding claims, **characterised in that** the angle of inclination (α) of the direction of the resultant (F3) of the support forces of the spring (2) with respect to its central axis (20) is comprised between 8° and 16°.

6. Device according to one of the preceding claims, **characterised in that** the support faces of the cups (3, 4) in contact with the end coils (23, 24) of the spring (2) are flat.

7. Device according to one of the preceding claims, **characterised in that** at least one of said cups (3, 4) has a curvilinear groove extending over at least a length corresponding to the arc portion (230, 240) of the end coil (23, 24) in support contact with it, so as to accommodate it in a wedged manner.

## Patentansprüche

1. Aufhängung vom Typ Pseudo-Mac-Pherson für Fahrzeuge, umfassend einen Stoßdämpfer (1), dessen Unterteil zum einen mit einer Radachse (R), zum anderen mit einem Querlenkerarm (B) verbunden ist, der am Chassis befestigt ist, und dessen Oberteil im Inneren einer Schraubenfeder (2) mit einer Mittelachse (20) steckt, die unten auf einem unteren Federteller (3) aufliegt, der mit dem Stoßdämpfer (1) fest verbunden ist, und oben auf einem oberen Federteller (4), der an der Karosserie (C) des Fahrzeugs befestigt ist, wobei die Auflageflächen der Endwindungen (23, 24) der Feder (2) auf dem oberen (3) und unteren (4) Federteller relativ zur Achse (20) der Feder jeweils auf der äußeren und inneren Seite angeordnet sind, **dadurch gekennzeichnet, daß** der Stoßdämpfer (1) und die Feder (2) auf koaxiale Weise angeordnet sind, und daß die Auflageflächen in einem Bogenabschnitt (230, 240) zwischen 60° und 120° liegen.

2. Vorrichtung nach Anspruch 1, **dadurch gekennzeichnet, daß** der Bogenabschnitt (230, 240) der Endwindungen (23, 24) der Feder (2), der mit den Federtellern (3, 4) im Auflagekontakt ist, relativ zur Achse X der Radachse symmetrisch ist.

3. Vorrichtung nach Anspruch 1 oder 2, **dadurch gekennzeichnet, daß** die Bogenabschnitte (230, 240) der Endwindungen (23, 24) der Feder (2), die jeweils mit dem unteren (3) und oberen (4) Federteller im Auflagekontakt sind, die gleiche Länge aufweisen.

4. Vorrichtung nach einem der vorstehenden Ansprüche, **dadurch gekennzeichnet, daß** die Bogenabschnitte (230, 240) der Endwindungen (23, 24), die jeweils mit dem unteren (3) und oberen (4) Federteller im Auflagekontakt sind, relativ zur Achse (20) der Feder (2) von einer Endwindung (23) zur anderen (24) symmetrisch sind.

5. Vorrichtung nach einem der vorstehenden Ansprüche, **dadurch gekennzeichnet, daß** die Neigung (α) der Richtung der Resultierenden (F3) der Auflagekräfte der Feder (2) relativ zu ihrer Mittelachse (20) zwischen 8° und 16° beträgt.

6. Vorrichtung nach einem der vorstehenden Ansprüche, **dadurch gekennzeichnet, daß** die Auflageflächen der Federteller (3, 4), die mit den Endwindungen (23, 24) der Feder (2) in Kontakt sind, plan sind.

7. Vorrichtung nach einem der vorstehenden Ansprüche, **dadurch gekennzeichnet, daß** mindestens einer der Federteller (3, 4) eine gekrümmte Nut umfaßt, die mindestens auf einer Länge verläuft, die dem Bogenabschnitt (230, 240) der im Auflagekontakt stehenden Endwindung (23, 24) entspricht, um diese aufzunehmen.
